# EUROPÄISCHE PATENTANMELDUNG

(11) **EP 0 863 648 A2**
(43) Veröffentlichungstag der Anmeldung: **09.09.1998**
(21) Anmeldenummer: 98102466.4
(22) Anmeldetag: 13.02.1998
(51) Int. Cl.: H04M 1/72, H04Q 7/32

(54) **Stationäre Einrichtung eines Mobilfunksystems**

(30) Priorität: 03.03.1997 DE 19711056
(71) Anmelder: DeTeWe - Deutsche Telephonwerke Aktiengesellschaft & Co., 10997 Berlin (DE)
(72) Erfinder: Antonov, Iavor, Dr., 10117 Berlin (DE); Baran, Marian, 12167 Berlin (DE)

(57) **Zusammenfassung**

Eine stationäre Einrichtung eines Mobilfunksystems, das über mehrere Basisstationen und je Teilnehmer einen Mobilteil verfügt, zum Anschließen von Endgeräten unterschiedlicher vom Netzbetreiber freigeschalteter Dienste ist dadurch gekennzeichnet, daß die stationäre Einrichtung (HS) Anschlüsse (z. B. a/b, Sₒ, V.24) für periphere Geräte aufweist, daß in die stationäre Einrichtung (HS) ein Mobilteil (MT) gesetzt ist und daß durch entsprechend programmierter Chip-Karten (CC) die Hardware- und Software-Komponenten der stationären Einrichtung (HS) für die Nutzung freigegeben werden. Eine zusätzliche externe Antenne sorgt für eine optimale Empfangsfeldstärke.

## Beschreibung

Die Erfindung bezieht sich auf eine stationäre Einrichtung eines Mobilfunksystems, das über mehrer Basisstationen und je Teilnehmer einen Mobilteil verfügt, zum Anschließen von Endgeräten unterschiedlicher vom Netzbetreiber freigeschalteter Dienste.

Digitale Mobilfunknetze, z. B. D1-, D2-, E-Netze, arbeiten nach einem GSM-Standard (Global Standard for Mobile) in einem Frequenzbereich, der um 900 bzw. 1800 MHz liegt. Derartige Netze sind in verschiedenen Veröffentlichungen beschrieben (NTZ, Bd. 47, S. 550 bis 563 "PCN/DCS 1800 Mobile Daten- und Telefaxübertragung in GSM-Netzen"). Darin wird der Anschluß von Endgeräten herkömmlicher Art, z. B. Faxgeräte und Personalcomputer an das Mobilfunknetz über einen Datenservice-Adapter vorgeschlagen, der die Schnittstellen a/b für analoge Endgeräte, ISDN für digitale Endgeräte und V.24 zur Datenübertragung umfaßt. Diese Adapter sind einerseits auf die verwendeten Mobiltelefone ausgerichtet und andererseits angepaßt an die anzuschließenden Peripheriegeräte. Für ein Mobilfunknetz, das der breiten Öffentlichkeit zugänglich ist, wie z. B. das E-Netz, ist es von Vorteil, einen universalen Schnittstellenzugang für stationäre Endgeräte anbieten zu können.

Der Erfindung lag die Aufgabe zugrunde, einen stationären Zugang für Endgeräte unterschiedlicher Telekommunikationsdienste zu schaffen, der nach Bedarf ausbaufähig ist.

Diese Aufgabe ist durch die Erfindung gelöst, wie sie im Kennzeichnungsteil des ersten Patentanspruches dargelegt ist. Weitere vorteilhafte Maßnahmen sind Gegenstand der Unteransprüche.

Die Erfindung wird nachfolgend anhand einer aus fünf Figuren bestehenden Zeichnung näher erläutert. In der Zeichnung zeigen die
- Fig. 1: die prinzipielle Darstellung der Benutzerebene eines Mobilfunkteilnehmers, die
- Fig. 2: eine stationäre Einrichtung mit einfachster Variante eines zusätzlich analogen Anschlusses, die
- Fig. 3: eine stationäre Einrichtung mit universeller Anschlußausstattung, die
- Fig. 4: eine stationäre Einrichtung mit abnehmbarem Mobilteil und die
- Fig. 5: eine als mobiles Terminal ausgestatte stationäre Einrichtung.

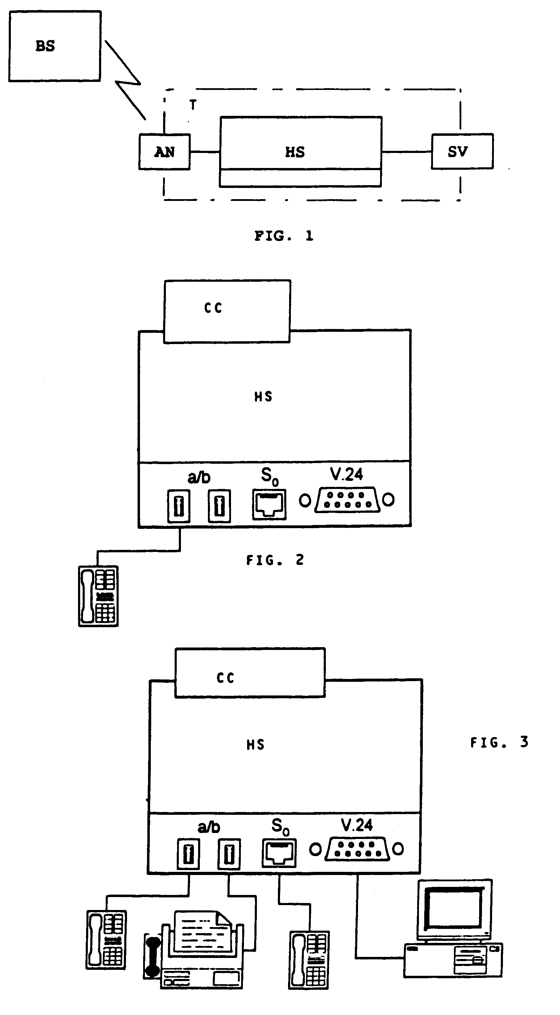

In der Benutzerebene (Fig. 1) eines Mobilteilnehmers gelangen die Sende- und Empfangssignale von der Basisstation BS über die Antenne AN an das Mobilteil T bzw. vom Mobilteil T über dessen Antenne AN an die Basisstation BS, die mit einer nicht dargestellten Mobilvermittlungsstelle in Funkverbindung steht. Allgemein ist das Mobilteil T ein Handy, dessen Energieversorgung über einen Akkumulator geschieht. Zum Aufladen des Akkumulators wird dieser oder das komplette Mobilteil an eine Stromversorgung SV geschaltet. Wie bereits eingangs erwähnt, können über Adapter weitere

Peripheriegeräte an das Mobilteil geschaltet werden. Um jedoch universell beliebige Kommunikationsgeräte mit einem digitalen Mobilfunknetz zu kombinieren, sind verschiedene Schnittstellen erforderlich:

So dient die a/b-Schnittstelle dem Anschluß analoger Endgeräte, wie Telefone, Faxgeräte und Modems. Die a/b-Anschlüsse können in zwei Varianten ausgeführt sein: als Sprachanschluß ausschließlich für die Sprachübertragung oder als Multifunktionsanschluß mit einer automatischen Erkennung einer Modem- bzw. Faxübertragung. Der Multifunktionsanschluß kann als reiner Datenanschluß, reiner Sprachanschluß oder Daten- und Sprachanschluß programmiert werden.

Der ISDN-Sₒ-Anschluß unterstützt die durch das Mobilfunknetz bereitgestellten Dienste, indem z. B. E-Netz-Protokolle in ISDN-Protokolle umgesetzt werden und umgekehrt ISDN-Protokolle in E-Netz-Protokolle. Eine Datenübertragung über die Sₒ-Schnittstelle wird mittels eines Sₒ-Basis-Protokolls realisiert.

Die V.24-Schnittstelle dient als Zugang zu einem Modem zur Datenübertragung.

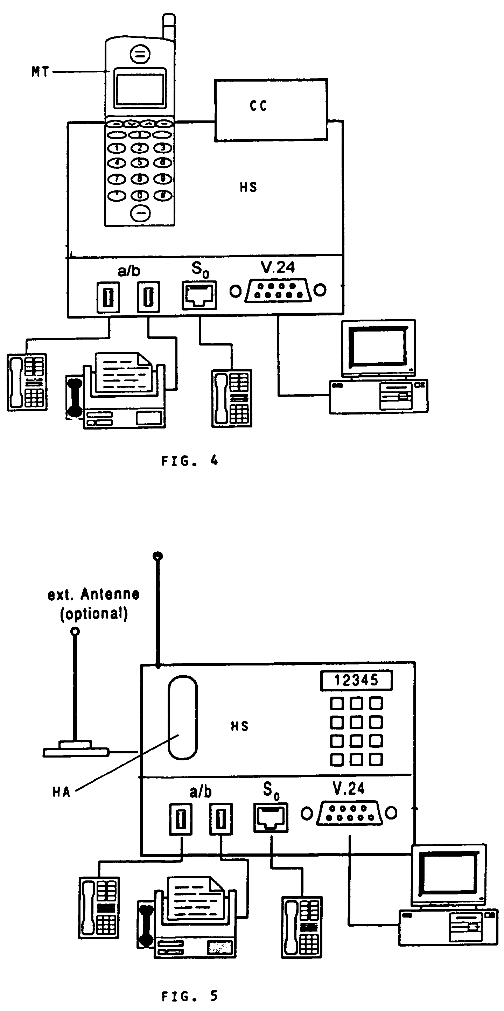

Um unterschiedliche Dienste in einem Mobilfunknetz dem Nutzer bieten zu können, wird erfindungsgemäß die in Fig. 1 als Mobilteil T bezeichnete Einrichtung als stationäre Einrichtung HS ausgeführt mit grundsätzlich allen möglichen, vom Netzbetreiber freigeschalteten Dienste-Anschlüssen bzw. deren Hardware- und Software-Komponenten. Die stationäre Einrichtung HS verfügt über eine Antenne AN und eine Stromversorgung SV. Wie in Fig. 2 und 3 dargestellt, weist die stationäre Einrichtung HS z. B. die Schnittstellen a/b, Sₒ und V.24 auf. In die stationäre Einrichtung HS ist entweder eine Mobilteil-Platine integriert oder das Mobilteil selbst wird an eine entsprechende Schnittstelle abnehmbar eingesetzt (Fig. 4) oder auch fest integriert.

Um die Konfigurierbarkeit der stationären Einrichtung HS universell zu gestalten, werden Chip-Karten CC entsprechender Programmierung verwendet. Will ein Nutzer nur zusätzlich ein analoges Telefon anschließen, gemäß Beispiel nach Fig. 3, so gibt die entsprechende Chip-Karte CC, die der Netzbetreiber vertreibt, nur diesen Anschluß a/b und die zugeordnete Software frei.

Will der Nutzer zu einem späteren Zeitpunkt sämtliche Möglichkeiten zur Verfügung haben, gemäß Beispiel Fig. 3 bis 5, ist nur die entsprechende Chip-Karte CC auszutauschen, die die Hardware- und Software-Komponenten freischaltet.

Grundsätzlich bieten sich anstelle der universellen Lösungen mittels verschiedener Chip-Karten auch fabrikatorische Lösungen an, die jeweils nur die gewünschten Schnittstellen-Anschlüsse umfassen, so daß z. B. bei einem analogen Telefonanschluß nur ein a/b-Anschluß an der stationären Einrichtung vorhanden ist.

Bei einem abnehmbaren Mobilteil MT (Fig. 4) weist die stationäre Einrichtung HS zusätzlich eine elektronische Schaltung für die Adaption der Schnittstellen a/b, Sₒ, V.24 an das Mobilteil MT auf. Die stationäre Einrichtung HS übernimmt dann die gesamte Steuerung des Mobilteils MT. Eine zusätzliche externe Antenne kann für eine optimale Empfangsfeldstärke sorgen. Über die Schnittstelle zwischen Mobilteil MT und stationärer Einrichtung HS wird die Betriebsspannung zugeführt. Die stationäre Einrichtung HS ersetzt in diesem Fall die Ladestation des Mobilteils MT.

Die beschriebene stationäre Einrichtung HS kann ebenso gut als mobiles Terminal ausgeführt sein, das an unterschiedlichen Orten einsetzbar ist (Fig. 5). Bei diesem Konzept ist die stationäre Einrichtung ein "stationäres Mobilteil" mit Schnittstellen für Zusatzgeräte. Die stationäre Einrichtung HS realisiert die gesamte Benutzerführung über ein eigenes Display und Tastenfeld. Das Gerät besitzt einen Handapparat HA und/oder Freisprecheinrichtung für komfortables Telefonieren.

Ebenso ist ein Anschluß für eine externe Antenne am Gehäuse vorhanden, um eine optimale Empfangsfeldstärke zu garantieren. Außerdem besitzt die stationäre Einrichtung HS einen Kartenleser für die Chip-Karte des Netzbetreibers.

## Patentansprüche

1. Stationäre Einrichtung eines Mobilfunksystems, das über mehrere Basisstationen und je Teilnehmer einen Mobilteil verfügt, zum Anschließen von Endgeräten unterschiedlicher vom Netzbetreiber freigeschalteter Dienste, dadurch gekennzeichnet, daß die stationäre Einrichtung (HS) Anschlüsse (z. B. a/b, Sₒ, V.24) für periphere Geräte aufweist, daß in die stationäre Einrichtung (HS) ein Mobilteil (MT) gesetzt ist und daß durch entsprechend programmierter Chip-Karten (CC) die Hardware- und Software-Komponenten der stationären Einrichtung (HS) für die Nutzung freigegeben werden.

2. Stationäre Einrichtung nach Anspruch 1, dadurch gekennzeichnet, daß eine zusätzliche externe Antenne für eine optimale Empfangsfeldstärke sorgt.

3. Stationäre Einrichtung nach Anspruch 1, dadurch gekennzeichnet, daß die stationäre Einrichtung als mobiles Terminal ausgeführt ist.

4. Stationäre Einrichtung nach Anspruch 1, dadurch gekennzeichnet, daß anstelle eines Mobilteils (MT) eine Mobilteil-Platine fest in die stationäre Einrichtung integriert ist.

5. Stationäre Einrichtung nach Anspruch 1, dadurch gekennzeichnet, daß sie nur die vom Nutzer gewünschten Schnittstellen aufweist.
